(19) Europäisches Patentamt / European Patent Office / Office européen des brevets

(11) **EP 3 763 874 A1**

(12) **EUROPEAN PATENT APPLICATION**
published in accordance with Art. 153(4) EPC

(43) Date of publication:
**13.01.2021 Bulletin 2021/02**

(21) Application number: **19764399.2**

(22) Date of filing: **25.02.2019**

(51) Int Cl.:
**D06M 17/00** (2006.01)     **A41D 13/00** (2006.01)
**A41D 31/02** (2019.01)     **A41D 31/26** (2019.01)
**D06M 15/53** (2006.01)

(86) International application number:
**PCT/JP2019/006976**

(87) International publication number:
**WO 2019/171996 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2018 JP 2018042686**

(71) Applicant: **Toray Industries, Inc.**
**Tokyo, 103-8666 (JP)**

(72) Inventors:
• **SHIBATA, Yu**
  **Otsu-shi, Shiga 520-2141 (JP)**
• **HAYASHI, Yuichiro**
  **Otsu-shi, Shiga 520-2141 (JP)**
• **XU, Jie**
  **Nantong, Jiangsu 226009 (CN)**

(74) Representative: **Mewburn Ellis LLP**
**Aurora Building**
**Counterslip**
**Bristol BS1 6BX (GB)**

(54) **ANTISTATIC DUSTPROOF FABRIC AND PROTECTIVE CLOTHING USING SAME**

(57)     The present invention addresses the problem of providing a dustproof fabric which comprises an antistatic dustproof fabric (1) having excellent antistatic properties, a high air permeability and high-level dustproof properties. The antistatic dustproof fabric (1), which comprises two or more fiber layers, is characterized in that: at least one of the two or more fiber layers is a first fiber layer (2) which contains a nonionic antistatic agent; and at least one of the two or more fiber layers is a second fiber layer (3) which is electrically charged.

## Figure 1

1

EP 3 763 874 A1

## Description

TECHNICAL FIELD

The present invention relates to an antistatic dust protective fabric and protective clothing formed thereof.

BACKGROUND ART

Conventionally, in operations to remove dust and chemicals or to handle dust and chemicals, workers often wear protective clothing, rubber gloves, rubber boots, and dust masks (hereinafter occasionally referred to as protective items) on top of clothing. These protective items are currently adopted in diversified environments including clean rooms where, for example, they are used to prevent dust from being raised by personnel during manufacturing of electronic components. On the other hand, electronic components are known to fail due to static electricity and therefore, for the purpose of preventing static electricity from being generated by abrasion of clothing of workers during their production, some clothing products for these workers have antistatic-treated surfaces. In addition, some protective clothing for workers engaged in removal, handling, etc. of dust and chemicals have antistatic-treated surfaces for the purpose of suppressing the adsorption of dust and chemicals due to static electricity and suppressing the occurrence of explosions due to static electricity.

Here, Patent document 1 discloses an improved nonwoven barrier and a method for manufacture thereof and proposes a laminate composed of a first and a second nonwoven web that are charged with electricity or treated with an antistatic material. It is disclosed that the combined use of such an electrified web and an antistatic-treated web serves to realize a higher average cell filtration efficiency (BFE) compared to cases where only uncharged webs are used. Specifically, it is shown that the filtration efficiency to remove fine particles such as bacteria and dust is improved by using a charged web.

In addition, Patent document 2, which discloses a protective clothing material and protective clothing, proposes protective clothing made of a protective clothing material having at least one surface treated with an antistatic agent in order to prevent fine particles such as dust from adhering to the protective clothing or prevent an explosion from being caused by static generation, and describes that a laminate sheet having an antistatic-treated spunbonded nonwoven fabric surface had an electrostatic surface resistivity of $1.5 \times 10^{10}$ Ω as measured according to JIS K 6911.

PRIOR ART DOCUMENTS

PATENT DOCUMENTS

Patent document 1: International Publication WO 96/00093
Patent document 2: Japanese Unexamined Patent Publication (Kokai) No. 2003-166106
Patent document 3: Published Japanese Translation of PCT International Publication JP 2011-522137

SUMMARY OF THE INVENTION

PROBLEMS TO BE SOLVED BY THE INVENTION

Patent document 1 discloses that a laminate composed of an electrified web and an antistatic-treated web has an improved average cell filtration efficiency because of the existence of the charged web. However, as disclosed in Patent document 3, it is known that an antistatic agent works to weaken the charging effect as it receives the charged electricity from the charged web or increases its conductivity, and in the case of the invention proposed in Patent document 1, therefore, it is expected that the average cell filtration efficiency improving effect of the charged electricity, that is, the effect of adsorbing dust and chemical substances, is unstable. Regarding the antistatic agent used for this invention, furthermore, no preferred examples of the antistatic agent are shown, indicating that no considerations are given to deterioration in charging performance that may be caused by such an antistatic agent.

Patent document 2 discloses protective clothing formed of a protective clothing material in which at least one surface is antistatic-treated and gives preferred examples of antistatic agents including nonionic substances such as polyoxyethylene alkyl ether, polyoxyethylene alkyl phenyl ether, polyoxyethylene alkylamine, and polyoxyethylene fatty acid ester. In the invention disclosed in Patent document 2, however, the protection against harmful substances such as harmful gases and harmful dust is realized by using sheets of synthetic resins such as polyacrylonitrile-based resin and ethylene vinyl alcohol copolymers, and it is expected that protective clothing materials that contain these synthetic resin sheets are so low in air permeability that protective clothing according to this invention, when worn, is poor in comfortability during work.

Accordingly, in view of the above circumstances, an object of the present invention is to provide an antistatic dust-prevention fabric having high levels of antistatic property, air permeability, and dust-prevention property.

MEANS OF SOLVING THE PROBLEMS

To solve the problem, the present invention provides an antistatic dust-prevention fabric as described below:

(1) An antistatic dust-prevention fabric including at least two or more fiber layers,
at least one layer, which is defined as fiber layer 1, of these two or more fiber layers containing a nonionic antistatic agent, and
at least another layer, which is defined as fiber layer 2, of these two or more fiber layers being in an electrified state.
(2) An antistatic dust-prevention fabric as set forth in (1), wherein the nonionic antistatic agent is polymer type nonionic antistatic agent.
(3) An antistatic dust-prevention fabric as set forth in either (1) or (2) having an air permeability of 60 $cm^3/cm^2/sec$ or more as measured by the Frazier method according to JIS L1913-2010 and a dust collection efficiency of 50% or more.
(4) An antistatic dust-prevention fabric as set forth in any one of (1) to (3), wherein the fiber layer 1 is disposed at least as either of the outermost layers.
(5) Protective clothing including an antistatic dust-prevention fabric as set forth in any one of (1) to (4).
(6) Protective clothing as set forth in (5), wherein the fiber layer 1 is exposed in part of either outer surface.

ADVANTAGEOUS EFFECTS OF THE INVENTION

The present invention serves to provide an antistatic dust-prevention fabric having high levels of antistatic property, air permeability, and dust-prevention property.

BRIEF DESCRIPTION OF THE DRAWINGS

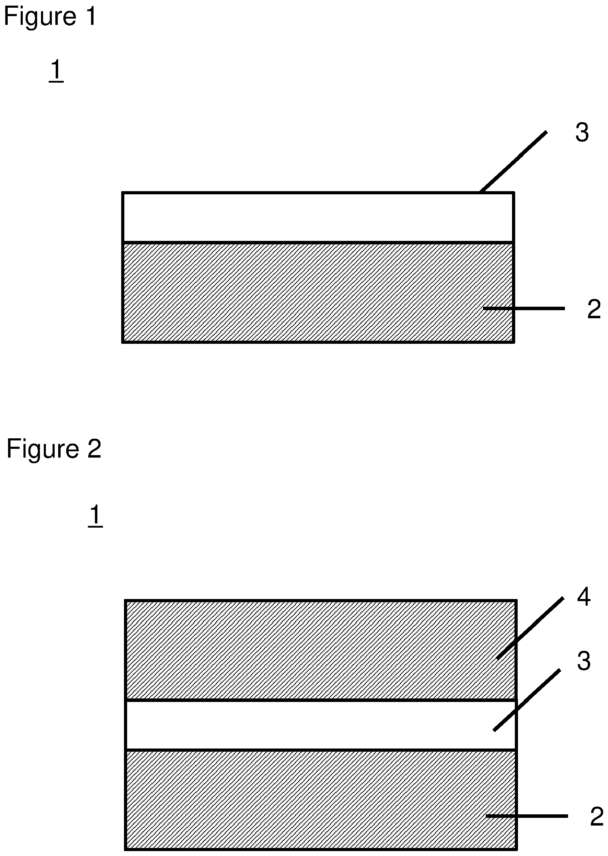

[Fig. 1] A conceptual cross-sectional view of the first embodiment of the antistatic dust-prevention fabric of the present invention
[Fig. 2] A conceptual cross-sectional view of the second embodiment of the antistatic dust-prevention fabric of the present invention
[Fig. 3] A conceptual SEM image of the antistatic dust-prevention fabric
[Fig. 4] A conceptual view illustrating the interaction between fibers present in the fiber layer 1 and a nonionic antistatic agent

DESCRIPTION OF PREFERRED EMBODIMENTS

The antistatic dust-prevention fabric according to the present invention and protective clothing including the antistatic dust-prevention fabric are described in detail below.

The antistatic dust-prevention fabric according the present invention includes at least two or more fiber layers, wherein at least one layer, which is defined as fiber layer 1, of these two or more fiber layers contains a nonionic antistatic agent, and at least another layer, which is defined as fiber layer 2, of these two or more fiber layers is in an electrified state.

The fiber layer 1 and the fiber layer 2 may be stacked in direct contact with each other, or other layers may be present between the fiber layer 1 and the fiber layer 2 unless they impair the preferred effects of the present invention. Here, it is preferable that the fiber layer 1 and the fiber layer 2 are in direct contact with each other in a stack because it serves to produce an antistatic dust-prevention fabric having a higher air permeability and also because the number of steps in the production process for the antistatic dust-prevention fabric can be reduced to realize a higher productivity in the production of the antistatic dust-prevention fabric. Here, structural examples of such a stack in which the fiber layer 1 and the fiber layer 2 are in direct contact include a structure in which the fiber layer 1 and the fiber layer 2 are directly combined through the entanglement of constituent fibers of each fiber layer that is realized by needle punching, etc., and a structure in which the fiber layer 1 and the fiber layer 2 are directly combined using an adhesive such as hot melt adhesive.

The fact that the fiber layer 1 contains a nonionic antistatic agent while the fiber layer 2 is an electrified layer serves to realize both an antistatic effect due to the fiber layer 1 and a high dust collecting efficiency due to the electrostatic charge on the fiber layer 2.

Here, it is presumed that the mechanism of deterioration in electrification performance of the fiber layer 2 that is disposed adjacent to the fiber layer 1 containing an antistatic agent is as follows.

First, in the case where the polarity of the antistatic agent is the same as that of the zeta potential of the fibers present the fiber layer 1, the antistatic agent is transferred into the fiber layer 2 that is located adjacent to the fiber layer 1 due to the strong repulsive interaction between the antistatic agent and the fibers in the fiber layer 1. As a result, the antistatic agent transferred into the fiber layer 2 will work to capture the static charges from the fiber layer 2 or increase its conductivity, leading to a decline in the electrification effect on the fiber layer 2. It should be noted that the strong repulsive interaction means a strong repulsive force.

Therefore, in the case where the fiber layer 1 contains a nonionic antistatic agent while the fiber layer 2 is an electrified layer, the fact that the antistatic agent is a nonionic antistatic agent serves to prevent a strong repulsive interaction from being generated between the nonionic antistatic agent and the fibers present in the fiber layer 1 regardless of whether the zeta potential of the fibers present in the fiber layer 1 has a positive polarity or a negative polarity. Thus, the nonionic antistatic agent is unlikely to move easily from the fiber layer 1 into the fiber layer 2, thus preventing the loss of electric charges on the fiber layer 2.

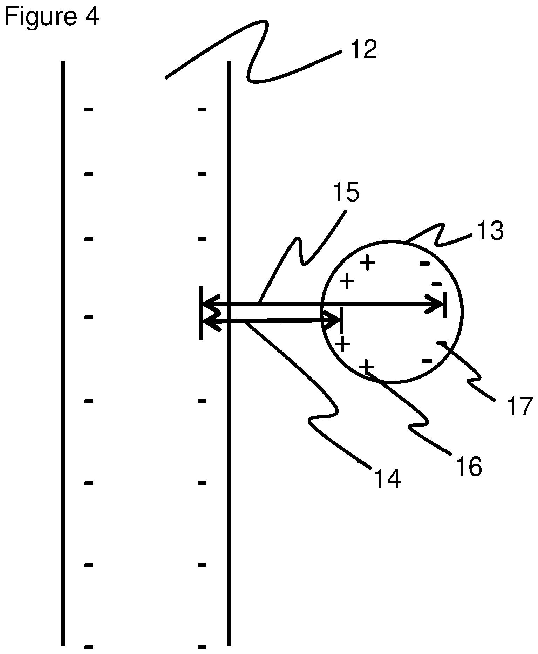

Furthermore, it is presumed that, in addition to suppressing the occurrence of a strong repulsive interaction between the nonionic antistatic agent and the fibers present in the fiber layer 1, the following mechanism also contributes to the prevention of deterioration in the electrification performance of the fiber layer 2. The mechanism is described below with reference to Fig. 4. Specifically, it can be assumed that the fiber 12 present in the fiber layer 1 substantially contains charges corresponding to the polarity of the zeta potential of the fibers 12. Then, the charge in the fiber 12 located closest to the nonionic antistatic agent 13 acts to cause dielectric polarization inside the molecule of the nonionic antistatic agent 13. Thus, the following occurs in the case shown in Fig. 4. The fiber 12 located closest to the nonionic antistatic agent 13 has a negative charge. Due to this negative charge, positive charges 16, which have the opposite polarity to the negative charge, are substantially generated in a portion of the nonionic antistatic agent 13 close to the fiber 12, whereas negative charges 17, which have the same polarity as the above negative charge, are substantially generated in a portion of the nonionic antistatic agent 13 far from the fiber 12. Then, an attractive force occurs between charges having opposite polarities, whereas a repulsive force occurs between charges having the same polarity. Here, since the distance 14 between the negative charge in the fiber 12 and the positive charge 16 is shorter than the distance 15 between the negative charge in the fiber 12 and the negative charge 17, the fiber 12 and the nonionic antistatic agent 13 are affected more strongly by the attractive force than by the repulsive force. It is presumed that, as a result, an attractive interaction occurs between the fiber 12 and the nonionic antistatic agent 13, and that this attractive interaction acts to prevent the nonionic antistatic agent from moving from the fiber layer 1 into the fiber layer 2, thereby suppressing the loss of charges from the fiber layer 2.

Fig. 4 illustrates a case in which the charge corresponding to the polarity of the zeta potential of the fiber 12 is negative, but it is expected that the same effect as described above can be realized in the opposite case in which the charge corresponding to the polarity of the zeta potential of the fiber 12 is positive, although the charges in the vicinity of the nonionic antistatic agent 13 will have the opposite polarities.

Regarding the numbers of the fiber layer 1 and the fiber layer 2, the resulting fabric may contain one fiber layer 1 and one fiber layer 2, totaling two fiber layers, or two of either type layer may be included. The antistatic property can be enhanced by using a larger number of fiber layer 1s while the dust collection efficiency can be increased by using a larger number of fiber layer 2s. Specifically, an antistatic dust-prevention fabric may contain, for example, a laminate of two layers consisting of a fiber layer 1 and a fiber layer 2, or a laminate consisting of a fiber layer 1, a fiber layer 2, and a fiber layer 1 stacked in this order.

In the case of an antistatic dust-prevention fabric including a plurality of layers, it is preferable that a fiber layer 1 is disposed as the outermost layer on either side of the fabric. If the antistatic dust-prevention fabric has the fiber layer 1 containing a nonionic antistatic agent as the outermost layer, it allows the outermost layer to be high in electrostatic surface resistivity, which is an indicator of antistatic performance.

The fiber layer 1 and the fiber layer 2 are described in detail below.

[Fiber layer 1]

Examples of the fiber used to form the fiber layer 1 present in the antistatic dust-prevention fabric according to the present invention include polyolefins such as polyethylene and polypropylene, polyesters such as polyethylene terephthalate and polylactic acid, others such as polycarbonates, fluorine-based resins, cellulose, wool, silk, nylon, and mixtures thereof. Of these, polyolefins are preferred from the viewpoint of high productivity in antistatic dust-prevention fabric production and good texture of the resulting antistatic dust-prevention fabrics, and among other polyolefins, polypropylene is particularly preferred from the viewpoint of high mechanical strength.

Good materials for the fiber layer 1 include woven fabrics, knitted fabrics, and nonwoven fabrics, of which nonwoven fabrics are preferred from the viewpoint of high productivity in producing the fiber layer 1. Various nonwoven fabrics are available including, for example, spun lace nonwoven fabrics, spunbonded nonwoven fabrics, melt blown nonwoven fabrics, and needle punched nonwoven fabrics, of which spunbonded nonwoven fabrics are preferred because of high productivity in fiber layer production as well as high strength and high air permeability.

The fiber layer 1 contains a nonionic antistatic agent. As described above, if the antistatic agent present in the fiber layer 1 is a nonionic antistatic agent, it serves to allow the fiber layer 2 to maintain its electrified state. Examples of the nonionic antistatic agent include generally known nonionic antistatic agents that contain ether compounds, polyhydric alcohol ether compounds, ester compounds, polyhydric alcohol ester compounds, or the like as main components. In particular, a polymer type nonionic antistatic agent is preferred from the viewpoint of longer antistatic performance retention after abrasion, and a polymer type nonionic antistatic agent containing an ester compound is preferred from the viewpoint of reducing the electrostatic surface resistivity, which is an indicator of antistatic performance.

For the antistatic finishing of the fiber layer 1, conventionally known techniques can be used unless the preferred effects of the present invention are impaired. For example, the fiber layer 1 may be subjected to immersion treatment in a treatment liquid containing an antistatic component, or an antistatic agent may be kneaded into the fiber used to form the fiber layer 1 so that the fiber itself will have antistatic property. The fiber layer 1 may be coated with a coating liquid containing an antistatic component to make it antistatic. In particular, the immersion based antistatic finishing technique is preferred because it commonly ensures high productivity and a small electrostatic surface resistivity which represents good antistatic property.

It is preferable for the fiber layer 1 to have 0.1% by mass or more of deposited antistatic agent. The amount is more preferably 0.7 mass or more. If it is 0.1% by mass or more, it serves to realize a small electrostatic surface resistivity which is an indicator of antistatic property. Although there are no particular limitations on the upper limit of the amount of the deposited antistatic agent in the fiber layer 1, it is practically preferably 10% by mass or less because the electrostatic surface resistivity will not be improved as the amount of the antistatic agent exceeds a certain level.

As regards the antistatic performance of the fiber layer 1, it is preferable for the electrostatic surface resistivity to be $5.0 \times 10^{12}$ $\Omega$ or less as measured according to EN1149-1-2006. If the electrostatic surface resistivity of the fiber layer 1 is $5.0 \times 10^{12}$ $\Omega$ or less, it serves to prevent the fiber layer 1 from being electrified as it comes in contact with or is abraded by another fiber layer 1 or other objects. To realize a preferred electrostatic surface resistivity value, there are known techniques that can be used unless the preferred effects of the present invention are impaired, including, for example, the use of an increased amount of deposited antistatic agent, which works to reduce the electrostatic surface resistivity.

[Fiber layer 2]

It is necessary for the fiber layer 2 present in the antistatic dust-prevention fabric according to the present invention to be in an electrified state. Because of being electrified, the fiber layer 2 will have higher dust collection performance.

For the electrification of the fiber layer 2, conventionally known techniques can be used unless the preferred effects of the present invention are impaired, and for example, the fiber layer 2 can be charged by corona electrification, frictional electrification, water flow electrification, or the like.

It is preferable that a melt blown nonwoven fabric produced by a melt blowing process is used as the fiber layer 2. In a common melt blowing process, a thermoplastic polymer extruded through spinning nozzles is exposed to a hot air jet to produce finely split fibers and a web is formed by means of the self-welding characteristics of the fibers. Major items of spinning conditions for a melt blowing process include polymer discharge rate, nozzle temperature, and air pressure, and the optimization of the spinning conditions serves to produce a nonwoven fabric having an intended fiber diameter. The use of a melt-blown nonwoven fabric as the fiber layer 2 makes it possible to provide an antistatic dust-prevention fabric that has a high dust collecting efficiency and air permeability when incorporating an electrified fiber layer.

From the viewpoint of, for example, productivity and electrification performance, good materials for the fiber layer 2 present in the antistatic dust-prevention fabric according to the present invention include those containing a polyolefin based resin as main component although various conventionally known techniques may be adopted unless the preferred effects according to the present invention are impaired. Of the various polyolefin based resins, polypropylene is particularly preferred from the viewpoint of easily improving the dust collecting performance of the fiber layer 2 by electrification. Here, the expression "the fiber layer 2 contains a polyolefin based resin as main component" means that, as described above, the polyolefin-based resin present in the fiber layer 2 accounts for 80% by mass or more of the entire fiber layer 2. Furthermore, it is preferable that the polyolefin-based resin present in the fiber layer 2 accounts for 90% by mass or more of the entire fiber layer 2, and it is more preferable that the fiber layer 2 is formed only of a polyolefin-based resin.

It is preferable that the antistatic dust-prevention fabric according to the present invention has an air permeability

of 60 cm$^3$/cm$^2$/sec or more as measured by the Frazier method according to JIS L1913-2010 and that the antistatic dust-prevention fabric at the same time has a dust collection efficiency of 50% or more. When the antistatic dust-prevention fabric has both a high air permeability and a high dust collection efficiency, it will be possible to achieve both high comfortability and high dust-prevention performance. The air permeability and dust collection efficiency of the antistatic dust-prevention fabric is described more specifically below.

When the air permeability of the antistatic dust-prevention fabric is 60 cm$^3$/cm$^2$/sec or more, the replacement of air will occur smoothly between one side and the opposite side of the antistatic dust-prevention fabric and accordingly, if the antistatic dust-prevention fabric is used as a filter, it serves for efficient replacement of air between one side and the opposite side. If the antistatic dust-prevention fabric is used as material for chemical protective clothing, efficient replacement of air will occur between the wearer and the outside through the antistatic dust-prevention fabric in the chemical protective clothing so that increases in the temperature and humidity inside the chemical protective clothing can be prevented to ensure high comfortability. Although there is no upper limit on the air permeability of the antistatic dust-prevention fabric, air permeability is generally a physical property having the opposite effect to the dust collecting efficiency so that the dust collecting efficiency tends to decrease as the air permeability increases, and practically, therefore, it is preferably 200 cm$^3$/cm$^2$/sec or less to maintain the dust collecting efficiency of the antistatic dust-prevention fabric in a desirable range.

To control the air permeability of the antistatic dust-prevention fabric in a desirable range, a practical method is to adjust the thickness and average fiber diameter of the fiber layer 1 and fiber layer 2 within appropriate ranges. Specifically, the air permeability can be decreased by decreasing the average fiber diameter or increasing the thickness of the fiber layer 1 or the fiber layer 2, whereas the air permeability can be increased by increasing the average fiber diameter or decreasing the thickness of the fiber layer 1 or the fiber layer 2.

It is preferable for the antistatic dust-prevention fabric according to the present invention to have a dust collecting efficiency of 50% or more. When the dust collecting efficiency of the antistatic dust-prevention fabric is 50% or more, the passage of dust can be suppressed efficiently as air containing dust passes through the antistatic dust-prevention fabric. Although the dust collecting efficiency of the antistatic dust-prevention fabric can be 100% at maximum, dust collecting efficiency is generally a physical property having the opposite effect to air permeability, as described above, so that the air permeability tends to decrease as the dust collecting efficiency increases, and practically, therefore, it is 95% or less to maintain the air permeability of the antistatic dust-prevention fabric in a desirable range.

To control the dust collecting efficiency of the antistatic dust-prevention fabric in a desirable range, a practical method is to adjust the thickness and average fiber diameter of the fiber layer 2, which is electrified, within appropriate ranges. Specifically, the dust collecting efficiency can be increased by decreasing the average fiber diameter or increasing the thickness of the fiber layer 2, whereas the dust collecting efficiency can be decreased by increasing the average fiber diameter or decreasing the thickness of the fiber layer 2.

The antistatic dust-prevention fabric according to the present invention may have a third layer other than the fiber layer 1 and the fiber layer 2. The third layer may be, for example, a fiber layer, perforated film, perforated metal foil, or the like unless the preferred effects according to the present invention are impaired, and it may be the same as the fiber layer 1. Furthermore, the third layer may be either a single layer or a combination of a plurality of layers.

The third layer may have special functions unless the preferred effects according to the present invention are impaired, and may have such functions as water repellency, oil repellency, flame retardancy, bacteria elimination, and mold inhibition.

When a third layer is present, it is preferable that the fiber layer 1 is disposed as the outermost layer on either side. If the antistatic dust-prevention fabric has the fiber layer 1 containing a nonionic antistatic agent as the outermost layer, it allows the outermost layer of the antistatic dust-prevention fabric to be high in electrostatic surface resistivity, which is an indicator of antistatic performance.

The antistatic dust-prevention fabric according the present invention can serve as material for chemical protective clothing. The inclusion of the antistatic dust-prevention fabric in chemical protective clothing serves to prevent the electrification of the surface of the chemical protective clothing during work to ensure comfortability due to high air permeability and dust-prevention performance due to high dust collection efficiency.

When using the antistatic dust-prevention fabric according the present invention as material for chemical protective clothing, it is preferable that the fiber layer 1 is exposed at least in a portion of either outer surface. If the fiber layer 1 containing a nonionic antistatic agent is arranged so that it is exposed at least in a portion of either outer surface, it allows the chemical protective clothing to have high electrostatic surface resistivity, which is an indicator of antistatic performance.

There are various methods for stacking the fiber layer 1, fiber layer 2, and third layer to form an antistatic dust-prevention fabric that can be adopted unless good features of the present invention are not impaired, and useful ones include ultrasonic bonding, thermal bonding using a thermal embossing roll having a pattern height of 1 mm or more, and pasting with an adhesive, which can serve to prevent the fiber layer 1 and the fiber layer 2 from melting or fusing beyond a desired degree due to excessive heat. Of these, pasting with an adhesive is particularly preferred in order to ensure uniform adhesion in the regions where the fiber layer 1, fiber layer 2, and third layer are in contact with each other.

EXAMPLES

The invention is described in more detail below with reference to Examples.

[Measuring methods]

(1) Dust collection efficiency

The dust collection efficiency of an antistatic dust-prevention fabric was measured by using a collection performance measuring device. The collection performance measuring device has a sample holder to hold a sample for measurement along with a dust storage box connected on its upstream side and a flow rate meter, a flow rate adjusting valve, and a blower connected on its downstream side. In addition, the sample holder is equipped with a particle counter that has a switch cock to measure the number of dust particles on the upstream side and the number of dust particles on the downstream side of the measuring sample. The sample holder is also equipped with a pressure gage to measure the difference in static pressure between the upstream side and the downstream side of the sample.
To determine the dust collection efficiency, the dust storage box was filled with standard latex powder of polystyrene having a diameter of 0.3 $\mu$m (a 10% by mass solution of 0.309 U polystyrene manufactured by Nacalai Tesque, Inc., diluted 200 times with distilled water) and the sample was set in the sample holder, followed by controlling the air feed rate by the flow rate adjusting valve so as to adjust the filter passing speed to 3 m/min, stabilizing the dust concentration in the range of 10,000 to 40,000 per $2.83 \times 10^{-4}$ m3 (0.01 ft$^3$), leave the equipment for 30 seconds after stabilization was reached, taking three measurements of the number of dust particles D on the upstream side and the number of dust particles d on the downstream side of the sample using a particle counter (KC-01 E, manufactured by Rion Co., Ltd.), and calculating the dust collection efficiency (%) from the averages of the three measurements each of the number of dust particles D and the number of dust particles d by the following equation. Measurements were taken by this procedure from 10 samples, and the dust collection efficiency values of the 10 samples were averaged.

$$\text{Dust collection efficiency (\%)} = [1 - (d/D)] \times 100$$

The dust collection efficiency values of the 10 samples were averaged.

(2) Dust collection efficiency retention rate

After determining its collection efficiency by the method described in (1), the antistatic dust-prevention fabric was sandwiched between two expanded polystyrene sheets having a size of 200 mm $\times$ 200 mm and a thickness of 1 cm, and left to stand for 14 days under a load of 6 kg in an environment at 35%RH and 60°C as an accelerated test. After the 14 day period, the antistatic dust-prevention fabric subjected to the accelerated test was taken out into an environment at 23°C, and left to stand for 24 hours, followed by calculating the collection efficiency retention rate (%) by the equation of "the collection efficiency B / the collection efficiency A $\times$ 100", wherein the collection efficiency A is the collection efficiency before the accelerated test while the collection efficiency B is the collection efficiency after the accelerated test determined by the collection efficiency measuring procedure described in paragraph (2). After taking measurements by this procedure from five samples, the dust collection efficiency retention rate measurements of the five samples were averaged and rounded off to the nearest whole number, followed by rating the fabric as A when its dust collection efficiency retention rate was 60% or more, or B when it is less than 60%, wherein A means "acceptable".

(3) Air permeability

To represent the air permeability of an antistatic dust-prevention fabric, the rate of air flow passing through a specimen having a size of 15 cm $\times$ 15 cm was measured by the Frazier method according to JIS L1913-2010. The rate of air flow was measured three times and the measurements was averaged to represent the air permeability.

(4) Electrostatic surface resistivity

For the measurement of the electrostatic surface resistivity of an antistatic dust-prevention fabric, a specimen having a size of 12 cm $\times$ 12 cm was prepared and the electrostatic surface resistivity of the fiber layer 1 was measured according to EN1149-1-2006.

(5) Electrostatic surface resistivity after abrasion

Measurement of the electrostatic surface resistivity after abrasion of an antistatic dust-prevention fabric was performed as follows: a 12 cm wide piece of cotton fabric as specified in JIS L0803 was fixed to a support of 12 cm × 12 cm and 1 kg and used to rub the fiber layer 1 of a test piece having a size of 12 cm × 12 cm at a rate of one time per second, and rubbing was performed a total of 300 times while replacing the cotton fabric every 10 times, followed by determining the electrostatic surface resistivity of the resulting test piece as specified in paragraph (4) Electrostatic surface resistivity.

(6) Agent deposition rate

From an antistatic dust-prevention fabric, the layers other than the fiber layer 1 were removed using No.1000 sandpaper. A 15 cm × 15 cm specimen was cut out of the resulting fiber layer 1 and the mass of the fiber layer 1 specimen was measured in grams to five decimal places. After measuring its mass, the fiber layer 1 specimen was put in a beaker containing 100 ml of methanol, and extraction by ultrasonic waves was performed for 10 minutes. The extract solution obtained by ultrasonic cleaning was dried at 40°C until it was concentrated to 1 ml, and then filtered through a 0.45 μm PTFE disk filter, and the filtrate containing the extract was diluted 10 times and then examined by an LC/MS/MS apparatus (LC20A, manufactured by Shimadzu Corporation). The antistatic agent in use was identified from the results obtained and the area of the peak attributed to the antistatic agent identified was calculated. For the calculation of the agent deposition rate, materials having the same composition as the antistatic agent identified from the fiber layer 1 were newly prepared and diluted 10 times, 100 times, or 1,000 times, with methanol to provide diluted solutions, which were examined in the same manner as for the extract-containing filtrate. The peak areas attributed to the antistatic agent identified above were calculated, and a calibration curve was formed from the amounts of the antistatic agent identified and the peak areas calculated. The peak area determined from the solvent extraction liquid of the fiber layer 1 was compared with the calibration curve, and the amount of the antistatic agent deposited on the fiber layer 1 was calculated and divided by the mass of the fiber layer 1 measured in advance to give a quotient, which was rounded off to one decimal place and adopted as the agent deposition rate (mass%) of the fiber layer 1.

(7) Thickness

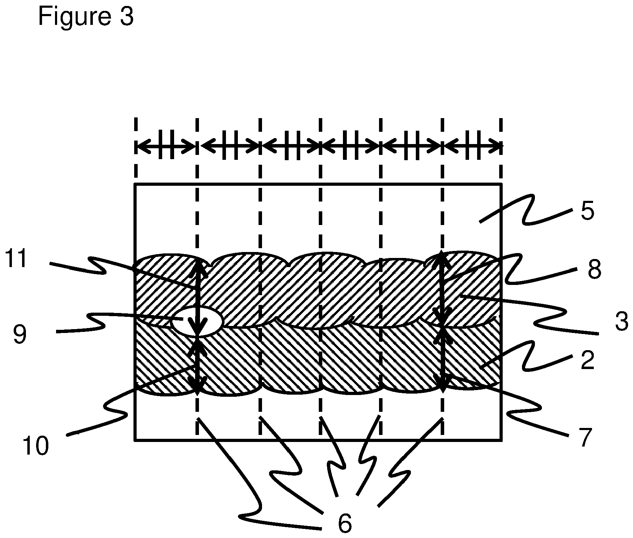

The antistatic dust-prevention fabric was cut with a microtome to expose a section perpendicular to the surface of the antistatic dust-prevention fabric. The cross-section of the antistatic dust-prevention fabric thus prepared was photographed at a magnification of 200 times under a field emission type scanning electron microscope (FE-SEM) (S-800, manufactured by Hitachi, Ltd.). At this time, photographing was performed so that the length direction of the image to obtain would be substantially perpendicular to the thickness direction of the antistatic dust-prevention fabric shown in the image. Here, a conceptual diagram illustrating the SEM image of the cross-section of the antistatic dust-prevention fabric is given in Fig. 3. The procedure for measuring the thickness of each layer constituting the antistatic dust-prevention fabric is described below with reference to Fig. 3. The conceptual diagram of the SEM image given Fig. 3 depicts the cross-section of the antistatic dust-prevention fabric, which includes the fiber layer 1 2 and the fiber layer 2 3, and background 6. First, in the SEM image, five dividing lines 7 were drawn which are perpendicular to the length direction of the SEM image and equally divides the width in the length direction of the SEM image into six. Then, the length of the section of each dividing line running across the fiber layer 1 2 was measured (an example of the dividing line running across the fiber layer 1 is numbered 8 in Fig. 3). Also, the length of the section of each dividing line running across the fiber layer 2 3 was measured (an example of the dividing line running across the fiber layer 2 is numbered 9 in Fig. 3). At this time, for the measurement of the lengths of the above dividing lines, the length of each dividing line was read to one decimal place in micrometers and rounded off to the nearest whole number. The above measuring procedure was performed on 10 SEM images taken from different portions of the cross section of the antistatic dust-prevention fabric to obtain 50 measurements of the lengths of the dividing lines running across the fiber layer 1, which were averaged to represent the thickness of the fiber layer 1. Then, 50 measurements of the lengths of the dividing lines running across the fiber layer 2 were taken and averaged to represent the thickness of the fiber layer 2. Here, in the case where there was a portion 10 (i.e., a portion where no fibers were seen in the photograph) which appeared to be a cavity at the boundary between the fiber layer 1 and the fiber layer 2 in the SEM image and where this cavity-like portion includes a dividing line, the cavity-like portion was assumed to be part of the fiber layer 2 when measuring the length of the section of the dividing line running across the fiber layer 2 and the length of the section of the dividing line running across the fiber layer 1. Accordingly, in the example given in Fig. 3, the section numbered 12 represents the length of the dividing line 7 running across the fiber layer 2 3 and the section numbered 11 represents the length of the dividing line 7 running across the fiber layer 1 2. Here, when the antistatic dust-prevention fabric further included a third layer, the thickness of the third layer was measured by the same measuring procedure as for the measurement of the thickness of the fiber layer 1 described above.

(8) Average fiber diameter

To further examine the antistatic dust-prevention fabric, a cross-section of the antistatic dust-prevention fabric prepared by the procedure described in (7) Thickness was photographed at magnifications of 500 times and 1000 times under a field emission type scanning electron microscope (FE-SEM) (S-800, manufactured by Hitachi, Ltd.). These image data were fed into the image analysis program provided with the equipment. Here, for fibers having fiber diameters of less than 10 $\mu$m, SEM images taken at a magnification of 500 times were used to determine their fiber diameters, whereas for fibers having fiber diameters of 10 $\mu$m or more, SEM images taken at a magnification of 1,000 times were used to determine their fiber diameters. More specifically, from the fiber layer 1 photographed in a SEM image, 15 fibers contained in this fiber layer 1 were randomly selected, and the fiber diameters of these fibers were measured. Then, the average of the 15 measurements thus taken was calculated to represent the average fiber diameter of the fibers in the fiber layer 1. In addition, from the fiber layer 2 photographed in a SEM image, 15 fibers contained in this fiber layer 2 were randomly selected, and the fiber diameters of these fibers were measured. Then, the average of the 15 measurements thus taken was calculated to represent the average fiber diameter of the fibers in the fiber layer 2. Here, for the fiber diameter measurement, the fiber diameter was read to one decimal place in micrometers and rounded off to the nearest whole number. Furthermore, when the antistatic dust-prevention fabric further included a third layer and this third layer was formed mainly of fibers, the average fiber diameter of the third layer was determined by the same measuring procedure as for the measurement of the average fiber diameter of the fiber layer 1 described above.

Preparation of the antistatic dust-prevention fabric was carried out as follows.

<Example 1>

A spunbonded nonwoven fabric A1 was formed using a spunbonded nonwoven fabric and an antistatic agent. For the antistatic treatment, Meika finish SRM-65, manufactured by Meisei Chemical Works, Ltd., was used as an antistatic agent, and normal hexanol was used as a penetrating agent. They were mixed in pure water according to the formula A specified in Table 2 and subjected to dipping treatment and mangling treatment. The mangled spunbond was dried at 135°C for 1 minute in a pin tenter.

After the antistatic treatment of the spunbonded nonwoven fabric A1, an adhesive (Moresco-Melt (registered trademark) TN-367Z, manufactured by Moresco Corporation), which was melted by heating at 150°C, was sprayed through a T-die by a hot melt adhesion machine over the first surface of the spunbonded nonwoven fabric A1 to a coating weight of 2 g/m$^2$. The adhesive applied in this step was found to be dispersed in a spotted pattern over the first surface of the spunbonded nonwoven fabric A1. Subsequently, the electrified meltblown nonwoven fabric B1 was bonded to the first surface of the spunbonded nonwoven fabric A1. The resulting two-layered sheet composed of the spunbonded nonwoven fabric A 1 and the meltblown nonwoven fabric B1 was wound up to provide the antistatic dust-prevention fabric of Example 1. The zeta potential, agent deposition rate, average fiber diameter, thickness, constituent fiber material, etc. of the fiber layer 1 present in the resulting antistatic dust-prevention fabric are shown in Table 1. In addition, the average fiber diameter, thickness, constituent fiber material, etc. of the fiber layer 2 present in the resulting antistatic dust-prevention fabric are shown in Table 1. Furthermore, the layer structure, collection efficiency, collection efficiency retention rate, electrostatic surface resistivity, electrostatic surface resistivity after abrasion, and air permeability of the resulting antistatic dust-prevention fabric of Example 1 are shown in Table 3.

<Examples 2 to 4>

Except for using an antistatic agent according to the formula B, C, or D, the same procedure as in Example 1 was carried out to combine a spunbonded nonwoven fabric and an antistatic agent to provide spunbonded nonwoven fabrics A2 to A4. Except for replacing the spunbonded nonwoven fabric A1 with the spunbonded nonwoven fabrics A2 to A4, the same procedure as in Example 1 was carried out to provide the antistatic dust-prevention fabrics of Examples 2 to 4. For the resulting spunbonded nonwoven fabrics A2 to A4, the agent deposition rate, average fiber diameter, and thickness are shown in Table 1. Furthermore, the layer structure, collection efficiency, collection efficiency retention rate, electrostatic surface resistivity, electrostatic surface resistivity after abrasion, and air permeability of the antistatic dust-prevention fabrics of Examples 2 to 4 are shown in Table 3.

<Examples 5 to 7>

The same procedure as in Example 1 was carried out to combine a spunbonded nonwoven fabric and an antistatic agent to provide spunbonded nonwoven fabrics A5 to A7. Except for replacing the spunbonded nonwoven fabric A1 with the spunbonded nonwoven fabrics A5 to A7, the same procedure as in Example 1 was carried out to provide the antistatic dust-prevention fabrics of Examples 5 to 7. For the resulting spunbonded nonwoven fabrics A5 to A7, the agent deposition rate, average fiber diameter, and thickness are shown in Table 1. Furthermore, the layer structure, collection efficiency, collection efficiency retention rate, electrostatic surface resistivity, electrostatic surface resistivity after abrasion, and air permeability of the antistatic dust-prevention fabrics of Examples 5 to 7 are shown in Table 3.

<Example 8>

In the same manner as in Example 1, the spunbonded nonwoven fabric A1 and the electrified meltblown nonwoven fabric B1 were combined to provide an antistatic dust-prevention fabric. For the resulting antistatic dust-prevention fabric composed of the spunbonded nonwoven fabric A1 and the electrified meltblown nonwoven fabric B1, an adhesive (Moresco-Melt (registered trademark) TN-367Z, manufactured by Moresco Corporation), which was melted by heating at 150°C, was sprayed through a T-die by a hot melt adhesion machine over the surface of the meltblown nonwoven fabric to a coating weight of 2 g/m$^2$. The adhesive applied in this step was found to be dispersed in a spotted pattern over the first surface of the meltblown nonwoven fabric B1. Subsequently, the spunbonded nonwoven fabric A9 was bonded to the first surface of the electrified spunbonded nonwoven fabric B1. The resulting three-layered sheet composed of the spunbonded nonwoven fabric A1, the meltblown nonwoven fabric B1, and the spunbonded nonwoven fabric A9 was wound up to provide the antistatic dust-prevention fabric of Example 8. For the resulting spunbonded nonwoven fabrics A1 and A9, the agent deposition rate, average fiber diameter, and thickness are shown in Table 1. Furthermore, the layer structure, collection efficiency, collection efficiency retention rate, electrostatic surface resistivity, electrostatic surface resistivity after abrasion, and air permeability of the antistatic dust-prevention fabrics of Examples 8 are shown in Table 3.

<Examples 9 to 12>

Except for replacing the electrified meltblown nonwoven fabric B1 with the electrified meltblown nonwoven fabrics B2 to B5, the same procedure as in Example 1 was carried out to provide the antistatic dust-prevention fabrics of Examples 9 to 12. The average fiber diameter and thickness of the resulting meltblown nonwoven fabrics B2 to B5 are shown in Table 1. Furthermore, the layer structure, collection efficiency, collection efficiency retention rate, electrostatic surface resistivity, electrostatic surface resistivity after abrasion, and air permeability of the antistatic dust-prevention fabrics of Examples 9 to 12 are shown in Table 3.

[Comparative example 1]

Except for replacing the antistatic agent used in Example 1 with an antistatic agent according to the formula E, the same procedure as in Example 1 was carried out to combine a spunbonded nonwoven fabric and an antistatic agent to provide a spunbonded nonwoven fabric A8. In addition, except for using the spunbonded nonwoven fabric A8 instead of the spunbonded nonwoven fabric A1, the same procedure as in Example 1 was carried out to provide the antistatic dust-prevention fabric of Comparative example 1. For the resulting spunbonded nonwoven fabric A8, the agent deposition rate, average fiber diameter, and thickness are shown in Table 1. Furthermore, the layer structure, collection efficiency, collection efficiency retention rate, electrostatic surface resistivity, electrostatic surface resistivity after abrasion, and air permeability of the antistatic dust-prevention fabrics Comparative example 1 are shown in Table 3.

[Comparative example 2]

Except for omitting the antistatic treatment step, the same procedure as in Example 1 was carried out to provide a spunbonded nonwoven fabric A9 using only a spunbonded nonwoven fabric. In addition, except for using the spunbonded nonwoven fabric A9 instead of the spunbonded nonwoven fabric A1, the same procedure as in Example 1 was carried out to provide the layered fiber stack of Comparative example 2. For the resulting spunbonded nonwoven fabric A9, the agent deposition rate, average fiber diameter, and thickness are shown in Table 1. Furthermore, the layer structure, collection efficiency, collection efficiency retention rate, electrostatic surface resistivity, electrostatic surface resistivity after abrasion, and air permeability of the layered fiber stack of Comparative example 2 are shown in Table 3.

[Comparative example 3]

The spunbonded nonwoven fabric A9 was adopted here, and an adhesive (Moresco-Melt (registered trademark) TN-367Z, manufactured by Moresco Corporation), which was melted by heating at 150°C, was sprayed through a T-die by a hot melt adhesion machine over the first surface of the spunbonded nonwoven fabric A9 to a coating weight of 2 g/m$^2$. The adhesive applied in this step was found to be dispersed in a spotted pattern over the first surface of the spunbonded nonwoven fabric A9. Subsequently, the electrified meltblown nonwoven fabric B1 was bonded to the first surface of the spunbonded nonwoven fabric A9. The resulting two-layered sheet composed of the spunbonded nonwoven fabric A9 and the meltblown nonwoven fabric B1 was wound up. For the resulting antistatic dust-prevention fabric composed of the spunbonded nonwoven fabric A9 and the electrified meltblown nonwoven fabric B1, an adhesive (Moresco-Melt (registered trademark) TN-367Z, manufactured by Moresco Corporation), which was melted by heating at 150°C, was sprayed through a T-die by a hot melt adhesion machine over the surface of the meltblown nonwoven fabric to a coating weight of 2 g/m$^2$. The adhesive applied in this step was found to be dispersed in a spotted pattern over the first surface of the meltblown nonwoven fabric B1. Subsequently, the spunbonded nonwoven fabric A1 was bonded to the first surface of the electrified spunbonded nonwoven fabric B1. The resulting three-layered sheet composed of the spunbonded nonwoven fabric A9, the meltblown nonwoven fabric B1, and the spunbonded nonwoven fabric A1 was wound up. Furthermore, for the resulting antistatic dust-prevention fabric composed of the spunbonded nonwoven fabric A9, the electrified meltblown nonwoven fabric B1, and the spunbonded nonwoven fabric A1, an adhesive (Moresco-Melt (registered trademark) TN-367Z, manufactured by Moresco Corporation), which was melted by heating at 150°C, was sprayed through a T-die by a hot melt adhesion machine over the surface of the spunbonded nonwoven fabric A1 to a coating weight of 2 g/m$^2$. The adhesive applied in this step was found to be dispersed in a spotted pattern over the first surface of the spunbonded nonwoven fabric A1. Subsequently, another layer of the spunbonded nonwoven fabric A9 was bonded to the first surface of the spunbonded nonwoven fabric A1. The resulting four-layered sheet composed of the spunbonded nonwoven fabric A9, the meltblown nonwoven fabric B1, the spunbonded nonwoven fabric A1, and the spunbonded nonwoven fabric A9 was wound up to provide the antistatic dust-prevention fabric of Comparative example 3. The layer structure, collection efficiency, collection efficiency retention rate, electrostatic surface resistivity, electrostatic surface resistivity after abrasion, and air permeability of the antistatic dust-prevention fabric of Comparative example 3 are shown in Table 3.

[Comparative example 4]

Except for replacing the electrified meltblown nonwoven fabric B1 with the unelectrified meltblown nonwoven fabric B6, the same procedure as in Example 1 was carried out to provide the antistatic dust-prevention fabric of Comparative example 4. The average fiber diameter and thickness of the meltblown nonwoven fabric B6 prepared are shown in Table 1. Furthermore, the layer structure, collection efficiency, collection efficiency retention rate, electrostatic surface resistivity, electrostatic surface resistivity after abrasion, and air permeability of the antistatic dust-prevention fabric of Comparative example 4 are shown in Table 3.

[Table 1]

| | Form of fiber | Constituent fiber material | Antistatic agent | Zeta potential | Agent deposition rate (mass%) | Fiber diameter (µm) | Thickness (µm) | Electrification |
|---|---|---|---|---|---|---|---|---|
| Fiber layer 1 (A) | spunbonded nonwoven fabric A1 | polypropylene | formula A | negative | 1.6 | 20 | 150 | - |
| | spunbonded nonwoven fabric A2 | polypropylene | formula B | negative | 3.3 | 20 | 150 | - |
| | spunbonded nonwoven fabric A3 | polypropylene | formula C | negative | 0.2 | 20 | 150 | - |
| | spunbonded nonwoven fabric A4 | polypropylene | formula D | negative | 2.2 | 20 | 150 | - |
| | spunbonded nonwoven fabric A5 | polypropylene | formula A | negative | 1.5 | 18 | 150 | - |
| | spunbonded nonwoven fabric A6 | polypropylene | formula A | negative | 1.7 | 30 | 150 | - |
| | spunbonded nonwoven fabric A7 | polypropylene | formula A | negative | 1.6 | 18 | 300 | - |
| | spunbonded nonwoven fabric A8 | polypropylene | formula E | negative | 1.8 | 20 | 150 | - |
| | spunbonded nonwoven fabric A9 | nylon 6 | formula A | positive | 1.4 | 20 | 150 | - |
| | spunbonded nonwoven fabric A10 | polypropylene | - | negative | 0 | 20 | 150 | - |

(continued)

| | Form of fiber | Constituent fiber material | Antistatic agent | Zeta potential | Agent deposition rate (mass%) | Fiber diameter ($\mu$m) | Thickness ($\mu$m) | Electrification |
|---|---|---|---|---|---|---|---|---|
| Fiber layer 2 (B) | meltblown nonwoven fabric B1 | polypropylene | - | - | - | 3 | 120 | electrified |
| | meltblown nonwoven fabric B2 | polypropylene | - | - | - | 1 | 120 | electrified |
| | meltblown nonwoven fabric B3 | polypropylene | - | - | - | 6 | 120 | electrified |
| | meltblown nonwoven fabric B4 | polypropylene | - | - | - | 3 | 80 | electrified |
| | meltblown nonwoven fabric B5 | polypropylene | - | - | - | 3 | 250 | electrified |
| | meltblown nonwoven fabric B6 | polypropylene | - | - | - | 3 | 120 | unelectrified |

[Table 2]

| | | Antistatic agent | | | Penetrating agent |
|---|---|---|---|---|---|
| | Type | Concentration (mass%) | Category | Concentration (g/L) | |
| Formula A | Meika Finish SRM-65, manufactured by Meisei Chemical Works | 5 | high molecular nonionic | 2 | |
| Formula B | Meika Finish SRM-65, manufactured by Meisei Chemical Works | 15 | high molecular nonionic | 2 | |
| Formula C | Meika Finish SRM-65, manufactured by Meisei Chemical Works | 0.5 | high molecular nonionic | 2 | |
| Formula D | Sanstat AA, manufactured by Meisei Chemical Works | 5 | low molecular nonionic | 2 | |
| Formula E | Delectol MAP, manufactured by Meisei Chemical Works | 5 | low molecular anion | 2 | |

[Table 3]

| | Layer constituents | | | | Collection efficiently (%) | Collection efficiently retention rate (%) | Electrostatic surface resistivity ($\omega$) | Electrostatic surface resistivity after abrasion ($\omega$) | Air permeability ($cm^3/cm^2/sec$) |
|---|---|---|---|---|---|---|---|---|---|
| | fiber layer 1 | fiber layer 2 | fiber layer 3 | | | | | | |
| Example 1 | spunbonded nonwoven fabric A1 | meltblown nonwoven fabric B1 | - | - | 83 | A | $2.5 \times 10^{11}$ | $3.2 \times 10^{11}$ | 121 |
| Example 2 | spunbonded nonwoven fabric A2 | meltblown nonwoven fabric B1 | - | - | 79 | A | $4.8 \times 10^{10}$ | $3.1 \times 10^{10}$ | 120 |
| Example 3 | spunbonded nonwoven fabric A3 | meltblown nonwoven fabric B1 | - | - | 80 | A | $1.8 \times 10^{12}$ | $1.0 \times 10^{12}$ | 122 |
| Example 4 | spunbonded nonwoven fabric A4 | meltblown nonwoven fabric B1 | - | - | 81 | A | $7.5 \times 10^{10}$ | $1.8 \times 10^{13}$ | 128 |
| Example 5 | spunbonded nonwoven fabric A5 | meltblown nonwoven fabric B1 | - | - | 86 | A | $12.8 \times 10^{11}$ | $1.3 \times 10^{11}$ | 105 |
| Example 6 | spunbonded nonwoven fabric A6 | meltblown nonwoven fabric B1 | - | - | 77 | A | $7.6 \times 10^{11}$ | $7.7 \times 10^{11}$ | 140 |
| Example 7 | spunbonded nonwoven fabric A7 | meltblown nonwoven fabric B1 | - | - | 86 | A | $1.8 \times 10^{11}$ | $4.0 \times 10^{11}$ | 91 |
| Example 8 | spunbonded nonwoven fabric A1 | meltblown nonwoven fabric B1 | spunbonded nonwoven fabric A9 | - | 83 | A | $3.2 \times 10^{11}$ | $1.1 \times 10^{11}$ | 89 |
| Example 9 | spunbonded nonwoven fabric A1 | meltblown nonwoven fabric B2 | - | - | 91 | A | $2.2 \times 10^{11}$ | $5.0 \times 10^{11}$ | 43 |

| | Layer constituents | | | | Collection efficiently (%) | Collection efficiently retention rate (%) | Electrostatic surface resistivity ($\omega$) | Electrostatic surface resistivity after abrasion ($\omega$) | Air permeability (cm$^3$/cm$^2$/sec) |
|---|---|---|---|---|---|---|---|---|---|
| | fiber layer 1 | fiber layer 2 | fiber layer 3 | | | | | | |
| Example 10 | spunbonded nonwoven fabric A1 | meltblown nonwoven fabric B3 | - | - | 62 | A | $2.6\times10^{11}$ | $3.1\times10^{11}$ | 153 |
| Example 11 | spunbonded nonwoven fabric A1 | meltblown nonwoven fabric B4 | - | - | 75 | A | $2.9\times10^{11}$ | $2.9\times10^{11}$ | 138 |
| Example 12 | spunbonded nonwoven fabric A1 | meltblown nonwoven fabric B5 | - | - | 91 | A | $3.9\times10^{11}$ | $1.5\times10^{11}$ | 45 |
| Comparative example 1 | spunbonded nonwoven fabric A8 | meltblown nonwoven fabric B1 | - | - | 82 | B | $1.2\times10^{8}$ | $5.2\times10^{11}$ | 122 |
| Comparative example 2 | spunbonded nonwoven fabric A9 | meltblown nonwoven fabric B1 | - | - | 80 | A | $< 1.0\times10^{15}$ | $< 1.0\times10^{15}$ | 124 |
| Comparative example 3 | spunbonded nonwoven fabric A9 | meltblown nonwoven fabric B1 | spunbonded nonwoven fabric A1 | spunbonded nonwoven fabric A9 | 83 | A | $< 1.0\times10^{15}$ | $< 1.0\times10^{15}$ | 84 |
| Comparative example 4 | spunbonded nonwoven fabric A1 | meltblown nonwoven fabric B6 | - | - | 25 | A | $2.5\times10^{11}$ | $1.1\times10^{11}$ | 120 |

INDUSTRIAL APPLICABILITY

The antistatic dust-prevention fabric according the present invention can serve effectively as material for chemical protective clothing.

Explanation of Numerals

1: Antistatic dust-prevention fabric
2: Fiber layer 1
3: Fiber layer 2
4: Fiber layer 3
5: Background
6: Dividing lines
7: Length of the dividing line running across the fiber layer 1
8: Length of the dividing line running across the fiber layer 2
9: Portion appearing to be a cavity
10: Length of the dividing line running across the fiber layer 1
11: Length of the dividing line running across the fiber layer 2
12: Fiber present in the fiber layer 1
13: Nonionic antistatic agent
14: Distance between negative charge and positive charge
15: Distance between two negative charges
16: Positive charge
17: Negative charge

**Claims**

1. An antistatic dust-prevention fabric comprising at least two or more fiber layers,
at least one layer, which is defined as fiber layer 1, of these two or more fiber layers containing a nonionic antistatic agent, and
at least another layer, which is defined as fiber layer 2, of these two or more fiber layers being in an electrified state.

2. An antistatic dust-prevention fabric as set forth in claim 1, wherein the nonionic antistatic agent is a polymer type nonionic antistatic agent.

3. An antistatic dust-prevention fabric as set forth in either claim 1 or 2 having an air permeability of 60 cm$^3$/cm$^2$/sec or more as measured by the Frazier method according to JIS L1913-2010 and a dust collection efficiency of 50% or more.

4. An antistatic dust-prevention fabric as set forth in any one of claims 1 to 3, wherein the fiber layer 1 is disposed at least as either of the outermost layers.

5. Protective clothing comprising an antistatic dust-prevention fabric as set forth in any one of claims 1 to 4.

6. Protective clothing as set forth in claim 5, wherein the fiber layer 1 is exposed at least in a portion of either outer surface.

Figure 1

1

3

2

Figure 2

1

4

3

2

Figure 3

Figure 4

## INTERNATIONAL SEARCH REPORT

| International application No. |
|---|
| PCT/JP2019/006976 |

**A. CLASSIFICATION OF SUBJECT MATTER**
Int.Cl.    D06M17/00(2006.01)i, A41D13/00(2006.01)i, A41D31/02(2019.01)i,
           A41D31/26(2019.01)i, D06M15/53(2006.01)i
According to International Patent Classification (IPC) or to both national classification and IPC

**B.   FIELDS SEARCHED**

Minimum documentation searched (classification system followed by classification symbols)
Int.Cl. D06M17/00, A41D13/00, A41D31/02, A41D31/26, D06M15/53

Documentation searched other than minimum documentation to the extent that such documents are included in the fields searched
Published examined utility model applications of Japan     1922–1996
Published unexamined utility model applications of Japan   1971–2019
Registered utility model specifications of Japan           1996–2019
Published registered utility model applications of Japan   1994–2019

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | KR 10-2009-0103351 A (KOLON GLOTECH INC.) 01 October 2009, claims 1, 8, 18, example 1, paragraphs [0011], [0040]-[0041] (Family: none) | 1-6 |
| A | WO 2016/104492 A1 (TORAY INDUSTRIES, INC.) 30 June 2016, claims, paragraphs [0034]-[0035] & US 2017/0326485 A1, claims, paragraphs [0043]-[0044] & EP 3239394 A1 & CN 107109781 A & KR 10-2017-0098797 A & MX 2017007912 A & BR 112017011036 A | 1-6 |
| A | JP 1-147822 A (TORAY INDUSTRIES, INC.) 09 June 1989, claims, example 1 (Family: none) | 1-6 |
| A | JP 10-505388 A (KIMBERLY-CLARK CORPORATION) 26 May 1998, claims, example 1 & US 5814570 A, claims, example 1 & WO 1996/000093 A1 & EP 767681 A1 & KR 10-0362860 B1 | 1-6 |

☐ Further documents are listed in the continuation of Box C.        ☐ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 18 April 2019 (18.04.2019) | 07 May 2019 (07.05.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 763 874 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9600093 A
- JP 2003166106 A
- JP 2011522137 W